# EUROPEAN PATENT APPLICATION

(11) **EP 2 770 688 A1**
(43) Date of publication of application: **27.08.2014**
(21) Application number: 13156372.8
(22) Date of filing: 22.02.2013
(51) Int. Cl.: H04L 29/06

(54) **Method and apparatus for assessing the efficiency of rules of filtering devices protecting a network**

(71) Applicant: ALCATEL LUCENT, 92100 Boulogne-Billancourt (FR)
(72) Inventor: Kanoun, Wael, 91620 Nozay (FR); Dubus, Samuel, 91620 Nozay (FR)
(74) Representative: Camus, Olivier Jean-Claude

(57) **Abstract**

The present invention relates a method (MTH1) for drawing up a list of paths (AP_Rᵢ) associated with a filtering rule (Rᵢ) of a filtering device (FW) protecting a network, said network being represented by a plurality of nodes, a path comprising a sequence of consecutive edges, an edge being a connection from a node to another node, said method (MTH1) comprising the following steps:
- Step A: Selecting a path (APᵤ) among a subset (SBS) of a set of paths (AP_set),
- Step B: Selecting an edge of said selected path (APᵤ),
- Step C: Performing a test, said test being:
■ negative if the selected edge does not match the filtering rule (Rᵢ)
■ positive if the selected edge matches the filtering rule (Rᵢ)

- Step D: In the case of positive test, adding the selected path (APᵤ) to a list (AP_Rᵢ) associated with the filtering rule (Rᵢ),
- Step E: Reiterating steps B, C, D until one test is positive or all edges of the selected path (APᵤ) have been selected,
- Step F: Reiterating steps A, B, C, D, E until all paths (APᵤ) of the subset (SBS) have been selected.

## Description

### FIELD OF THE INVENTION

The present invention relates to security of networks by filtering devices, and more particularly to a method for quoting the contribution to a network overall security state of a filtering rule of a filtering device protecting said network. A filtering device is for example a firewall or an intrusion prevention system (IPS).

### BACKGROUND

Filtering devices such as firewalls or IPS are used to allow or block flows in an information technology (IT) system in order to protect said system against unwanted or undesired access. Indeed, the primary objective of a filtering device is to control the incoming and outgoing network traffic by analyzing the data packets and determining whether it should be allowed through or not, based on a predetermined rule set.

Nowadays, filtering devices (be they based on simple packet filter, statefull packet inspection or deep packet inspection) still mainly rely on the description of said rules to implement the filtering policy. Thus, an administrator of the network or a security officer should be able to evaluate the relevance of a specific filtering device rule to the overall security state of the protected system. Indeed, the modification of a filtering device rule can have a devastating effect on the security state of the protected system. For instance, a port that potentially enables an attacker to exploit a vulnerable device can be opened, jeopardizing a critical asset, and consequently the general security of the protected system.

Some filtering devices rules efficiency evaluation tools exist (such as Skybox, RedSeal, Tufin, etc). These tools permit to find out whether a filtering device rule is relevant to a defined filtering policy, for example if said rule is frequently used, shadowed by another rule, or violates a generic security requirement.

However, these tools do not permit to an administrator to evaluate whether a rule can allow or block a potential attack path to a critical asset of the protected system. Hence, using existing filtering devices management solutions, a security officer who optimizes the description/modification/removal of the filtering devices rules has no simple and accurate means to consider their impact on the exposure of the protected system to potential attacks. Mostly, the modification/management/removal of filtering devices rules is performed by relying solely on the expertise and the common sense of the security officer, the security officer being clueless about the effect of any modification of filtering devices rules on the overall security state. Such approach is subjective, error-prone, and can cause severe damage to the security of the protected system.

### SUMMARY

It is an object of the invention to provide a method and an apparatus for an administrator to assess the contribution of a filtering device rule to the general security state of a protected system.

To this end, the invention provides a method for drawing up a list of paths associated with a filtering rule of a filtering device protecting a network, said network being represented by a plurality of nodes, a path comprising a sequence of consecutive edges, an edge being a connection from a node to another node, said method comprising the following steps:
- Step A: Selecting a path among a subset of a set of paths,
- Step B: Selecting an edge of said selected path,
- Step C: Performing a test, said test being:
   ■ negative if the selected edge does not match the filtering rule
   ■ positive if the selected edge matches the filtering rule
- Step D: In the case of positive test, adding the selected path to a list associated with the filtering rule,
- Step E: Reiterating steps B, C, D until one test is positive or all edges of the selected path have been selected,
- Step F: Reiterating steps A, B, C, D, E until all paths of the subset have been selected.

A node across an attack path ATP is associated with ingress connection information from the previous node, and egress connection information toward the next node. Connection information is for example source/destination Internet Protocol (IP) address, source/destination port number, and protocol type.

On the other hand, a filtering device rule is at least a four-tuple defined as follows:
<rule id><action><ingress><egress>, where:
- <rule id> is the rule identification number (for example R₁)
- <action> is the action of the rule: "allow" or "deny". This defines if the rule allows or denies the traffic to go through
- <ingress> is a set of ingress connection information defined for the rule, which can be composed of a mix of source IP address ranges or lists, source port ranges, etc
- <egress> is a set of egress connection information defined for the rule, which can be composed of a mix of destination IP address ranges or lists, destination port ranges, etc.

It should be noted that an optional tuple comprising protocol lists can be defined.

Considering a filtering rule and an edge connecting a first node and a second node, said edge is said "matching" said filtering rule if:
- ingress connection information associated with the first node is a subset of ingress information defined for the filtering rule, and
- egress connection information associated with the second node is a subset of egress information defined for the filtering rule.

Besides, a path is said "relevant" to a filtering rule if at least one of its edge matches with said filtering rule.

Thanks to the method for drawing up a list associated with a filtering rule, a list of attack paths that are relevant to a specific filtering rule is drawn up.

The method for drawing up a list associated with a filtering rule is used in a method for quoting the contribution to a network overall security state of a filtering rule, mentioned hereafter.

According to a not limited embodiment, the subset mentioned in step A comprises paths of the set of paths that are not contained into the list.

Thus, a path is not selected twice.

According to a not limited embodiment, step (D) comprises additional steps of: in the case of positive test:
- (D') Selecting paths among the subset that comprise the selected edge,
- (D") Adding said selection to the list.

Thus, the drawing up of the list is optimized and accelerated: if an attack path is identified as relevant to the filtering rule, that is to say if one of its edge matches said filtering rule, all the other attack paths that share said edge are consequently identified as relevant to the filtering rule.

In addition, there is provided a method for quoting the contribution to a network overall security state of a filtering rule of a filtering device protecting said network, said network comprising nodes comprising entry points for attacks and critical assets to secure, said method comprising the following steps:
- (G) Generating a set of paths, a path comprising a sequence of consecutive edges, an edge being a connection from a node to another node, said set of paths comprising potential attack paths from entry points to critical assets,
- (H) Drawing up a list of paths associated with said filtering rule, according to the method for drawing up a list associated with a filtering rule, using said set of paths within step (A),
- (I) Computing a score associated with said filtering rule by means of said list of paths.

Thanks to the method for quoting the contribution of a filtering rule, a security officer can use the score for assessing the contribution of the filtering rule to the security of the protected network. Thus, the security officer can take some administrative decisions and/or realize proactive protection actions.

According to a not limited embodiment, step (G) comprises an initial step of: (G") Decomposing an attack graph into dissociated potential attack paths, said attack graph depicting various attack paths to reach critical assets from entry points through edges. Attack graphs are powerful tools to enable the assessment of security risks threatening a network. Attack graphs depict potential attack scenarios that an attacker can follow in order to launch attacks in the system, starting from an entry point and ending at a critical asset. Thus, it is easy to generate a set of potential attack paths from an attack graph.

According to a not limited embodiment, step (G") comprises:
- (G') Assigning a label to every edge depicted in the attack graph,
- (G"') Associating an index vector to every dissociated potential attack path, said index vector comprising labels assigned to the edges of said potential attack path.

Thus, it is easy to identify paths sharing an edge.

According to a not limited embodiment, step (D') comprises an initial step of: (D"') Identifying paths among the subset that comprise the selected edge by comparing labels of their index vectors with the label of the selected edge.

Thus, labels and index vectors are used for carrying out the method of drawing up a list associated with a filtering rule.

According to a not limited embodiment, each potential attack path of the set of paths is associated with an indicator representing the contribution of said attack path to the global risk level of the critical asset targeted by said attack path, and the score of step (I) is computed by means of the indicators of attack paths of the list of paths.

Indicators can be assessed a priori by an administrator basing on the criticality of the targeted critical asset and the nature of exploited vulnerabilities. Thus, the computed score takes into account the various criticalities or severities of the various filtering rules.

According to a not limited embodiment, the score of step (I) is computed by a weighted sum of said indicators.

This is an easy way for computing the score.

According to a not limited embodiment, the method for quoting the contribution of a filtering rule comprises an additional step of: (J)

Displaying said score on a user interface.

Thus, the score is presented to an administrator, who can take some administrative decisions and/or realize proactive protection actions.

According to a not limited embodiment, the method for quoting the contribution of a filtering rule comprises an initial step of: (K) Selecting a filtering rule among a set of rules of at least a filtering device protecting the network.

Thus, an administrator can choose the rule to analyze.

According to a not limited embodiment step (K) comprises an initial step of: Retrieving said set of rules from a repository or from at least a filtering device by using a secure protocol.

Indeed, this way of retrieving the filtering rules is easy to carry out.

In addition, there is provided an apparatus for quoting the contribution to a network overall security state of a filtering rule of a filtering device protecting said network, comprising:
- A memory for storing a set of paths,
- A selection unit for drawing up list of paths associated to said filtering rule, said list of paths comprising paths that are relevant to said filtering rule,
- A calculation unit for computing a score associated with said filtering rule by means of said list of paths,
- A user interface for displaying said score.

This apparatus is adapted for carrying out the method for drawing up a list associated with a filtering rule, and the method for quoting the contribution of a filtering rule previously mentioned.

According to a not limited embodiment, the apparatus comprises a filtering device rule manager for retrieving a set of rules defined for at least a filtering device protecting the network.

According to a not limited embodiment, the apparatus comprises a dissociation unit for, from an attack graph associated with the network:
- Assigning a label to every edge depicted in the attack graph
- Decomposing the attack graph into a set of paths comprising potential attack paths
- Associating an index vector to every dissociated potential attack path, said index vector comprising labels assigned to the edges of said potential attack path
- Storing said set of path in the memory.

In addition, there is provided a computer program product for a computer, comprising a set of instructions, which when loaded into said computer, causes the computer to carry out one of the previously described methods.

### BRIEF DESCRIPTION OF THE DRAWINGS

Some embodiments of apparatus and/or methods in accordance with embodiments of the present invention are now described, by way of example only, and with reference to the accompanying drawings, in which:
- figure 1 schematically illustrates an example of an attack graph associated to a simple network;
- figure 2 schematically illustrates an attack path;
- figure 3 schematically illustrates steps of a first embodiment of a method for drawing up a list associated with a filtering rule, according to the invention;
- figure 4 schematically illustrates steps of a second embodiment of a method for drawing up a list associated with a filtering rule, according to the invention;
- figure 5 schematically illustrates steps for generating a set of attack paths from an attack graph, according to a not limited embodiment of the invention;
- figure 6 schematically illustrates steps of figure 5 applied to the attack graph of figure 1;
- figure 7 schematically illustrates steps of a not limited embodiment of a method for quoting the contribution of a filtering rule, according to the invention;
- figure 8 schematically illustrates an apparatus for carrying out the methods previously mentioned, according to a not limited embodiment of the invention.

### DESCRIPTION OF EMBODIMENTS

In the following description, well-known functions or constructions by the man skilled in the art are not described in detail since they would obscure the invention in unnecessary detail.

The invention applies to a plurality of filtering devices, such as firewalls or IPS, protecting a network. Indeed, a network is usually protected by a plurality of filtering devices comprising filtering rules. However, it should be noted that the invention also applies if the network is protected by an only filtering device. Said network is schematically represented by a plurality of nodes. A node is an active electronic device attached to the network, capable of sending, receiving or forwarding information over a communication channel. A node is either a connection point, either a redistribution point, or a communication endpoint, that is to say some terminal equipment. Modems, switches, routers, workstations, servers, telephone handsets or printers are example of nodes. Some of these nodes are connected in pairs by edges. In other words, an edge, also called a link, is a connection, physical or logical, between two nodes.

Some of these nodes are identified as critical assets. A critical asset is a facility, system, or equipment which, if destroyed, degraded or otherwise rendered unavailable, would affect the reliability or operability of the network, or cause a damage (e.g. financial) to an entity (e.g. a company) exploiting it. The filtering devices aim at protecting these critical assets, by filtering specific network traffic through so-called filtering devices rules. Indeed, the filtering policy is implemented by a set of filtering rules defined for the filtering devices. A network manager/administrator or security officer, can define, modify, update or remove said filtering devices rules.

Attack graphs are classically used for helping the security supervision. An attack graph depicts ways in which an adversary can exploit vulnerabilities to break into a system, that is to say ways in which a system can be compromised. An attack graph visually shows entry points (some nodes of the network) into the network, and the paths available from said entry points to the critical assets. A path is a sequence of successive edges connecting nodes. In other words, an attack graph depicts potential attack scenarios that an attacker can follow in order to launch an attack and penetrate the system, starting from an entry point and ending at a critical asset. Thus, attack graphs are powerful tools to enable the assessment of the security risks that threaten a network.

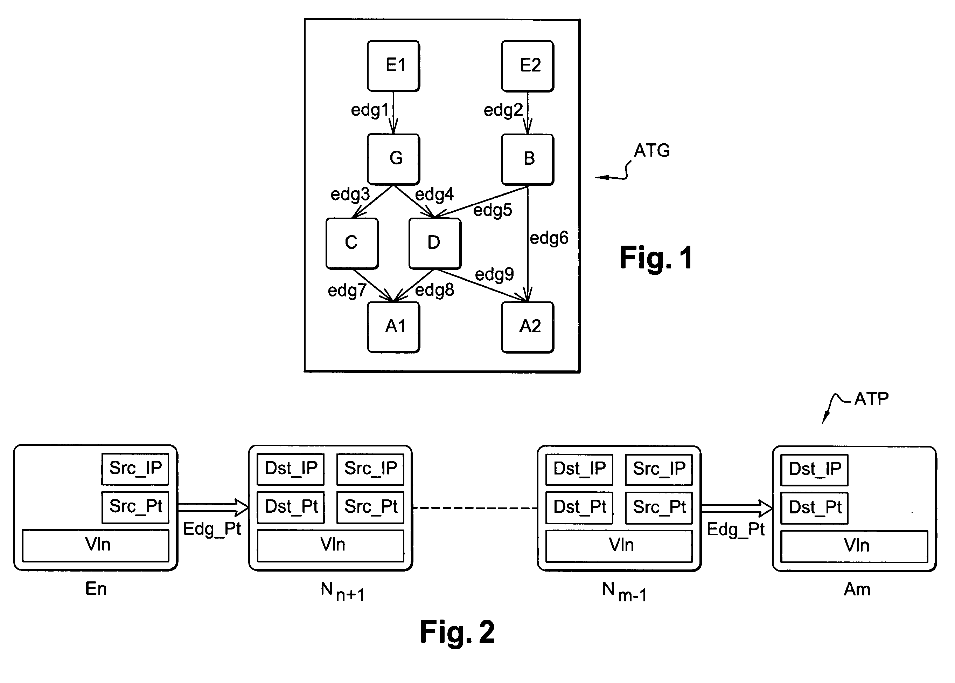

An attack graph can be dissociated into a set of attack paths, an attack path being a path from an entry point to a critical asset. Figure 1 schematically illustrates an attack graph ATG for a simple network. Said network comprises the following nodes:
- a first entry point E1
- a second entry point E2
- a first critical asset A1
- a second critical asset A2
- some other nodes B, C, D, G
and the following edges:
- edg1 from the first entry point E1 to node G
- edg2 from the second entry point E2 to node B
- edg3 from node G to node C
- edg4 from node G to node D
- edg5 from node B to node D
- edg6 from node B to the second critical asset A2
- edg7 from node C to the first critical asset A1
- edg8 from node D to the first critical asset A1
- edg9 from node D to the second critical asset A2.

Thus, the attack graph can be dissociated into six attack paths:
- (edg1; edg3; edg7)
- (edg1; edg4; edg8)
- (edg1; edg4; edg9)
- (edg2; edg5; edg9)
- (edg2; edg5; edg8)
- (edg2; edg6).

More generally, figure 2 schematically illustrates an example of an attack path ATP from an entry point Eₙ to a critical asset Aₘ. Each node Nᵢ (Nₙ₊₁ until Nₘ₋₁) across said attack path ATP is associated with the following data:
- vulnerabilities Vlt exploited by the attacker
- ingress connection information from the previous node
- egress connection information toward the next node

Connection information is for example an Internet Protocol (IP) address Scr_IP, Dst_IP (or a list of IP addresses), a port Src_Pt, Dst_Pt (or a range of ports), or any other data contained in a frame. Moreover, additional data can be associated to edges, for example the used protocol Edg_Pt (or a list of protocols).

It should be noted the entry point Eₙ only contains vulnerabilities and egress connection information, whereas the critical asset Aₘ only contains vulnerabilities and ingress connection information.

The ingress and egress connection information are also used for defining the filtering rules of the filtering devices. More precisely, a filtering device rule Rᵢ is a four-tuple defined as follows:
<rule id><action><ingress><egress>, where:
   - <rule id> is the rule identification number (for example R₁)
   - <action> is the action of the rule, that is to say "allow" or "deny". This defines if the rule allows or denies the traffic to go through
   - <ingress> is a set of ingress connection information defined for the rule, which can be composed of a mix of source IP address ranges or lists, source port ranges, etc
   - <egress> is a set of egress connection information defined for the rule, which can be composed of a mix of destination IP address ranges or lists, destination port ranges, etc.

It should be noted that an optional tuple comprising protocol lists can be defined.

Considering an edge connecting a first node and a second node, said edge "matches" the filtering rule if:
- ingress connection information associated with the first node is a subset of the set of ingress information defined for the filtering rule, and
- egress connection information associated with the second node is a subset of the set of egress information defined for the filtering rule.

Besides, a path is said "relevant" to a filtering rule if at least one of its edge matches said filtering rule.

The invention provides a method for drawing up a list associated with a filtering rule, said list comprising attack paths relevant to said filtering rule.

### Method for drawing up a list associated with a filtering rule: first embodiment

A first embodiment is described hereafter. In this first embodiment, a systematic comparison between all attack paths and a filtering rule is performed. A given filtering device rule Rᵢ is compared with all attack paths in order to retain those that are relevant to said rule Rᵢ.

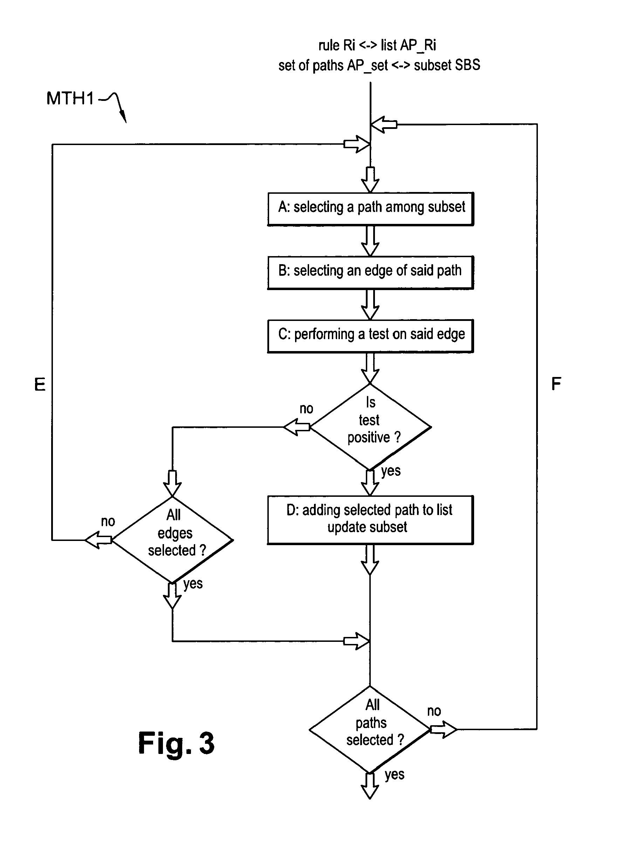

Steps of said method are schematically illustrated in figure 3. The method MTH is carried out for a given filtering device rule Rᵢ, said rule Rᵢ being associated with a list AP_Rᵢ which is empty at the beginning of the method MTH1. The method MTH1 uses a predetermined set of paths AP_set comprising attack paths. Said set of paths AP_set has for example been retrieved from a database that stores potential attack paths for the network, or deduced from an attack graph. It should be noted that said set of paths AP_set does not comprise necessarily all potential attack paths: a selecting can have been previously realized according to some parameters.

Said method MTH1 comprises the following steps:
- Step A: Selecting an attack path APᵤ among a subset SBS of the set of paths AP_set. Said subset SBS comprises paths of the set of paths AP_set that are not contained into the list AP_Rᵢ. At the beginning of the method, the list AP_Rᵢ is empty, and then the subset SBS is the set of paths AP_set.
- Step B: Selecting an edge of said attack path APᵤ. At the beginning of the method, this edge is for example the first edge of the attack path APᵤ.
- Step C: Performing a test, said test being:
   ■ negative if the selected edge does not match the filtering rule Rᵢ
   ■ positive if the selected edge matches the filtering rule Rᵢ

A positive test means that the selected attack path APᵤ is relevant to the filtering rule Rᵢ.
- Step D: If the test is positive, then adding the selected attack path APᵤ to the list AP_Rᵢ and updating the subset SBS of the set of paths AP_set, so that an attack path can not been selected twice.
- Step E: If the test is negative, then reiterate steps A, B, C and D until all edges of the selected attack path APᵤ have been selected or until one test is positive. If tests are negative for all edges of the selected attack path APᵤ, then it means that said attack path APᵤ is not relevant to the filtering rule Rᵢ.
- Step F: Reiterating steps A, B, C, D and E until all attack paths of the subset SBS have been selected. At the ending of the method, the list AP_Rᵢ comprises all attack paths relevant to the filtering rule Rᵢ.

An associated algorithm in native language is given hereafter: AP_Rᵢ = null (*this is the list storing attack paths relevant to the filtering device rule R*ᵢ, *which is empty at the beginning of the method)*

```
 For each attack path APu of the subset {
   For each edge j of the attack path APu {
    If test is positive, Then {
     Add the attack path APu to the list AP_Ri;
     Update the subset;
     Break
    }
  }
 }
```

### Method for drawing up a list associated with a filtering rule: second embodiment

A second embodiment is described hereafter. This second embodiment allows an accelerated carrying out of the method, compared to the first embodiment.

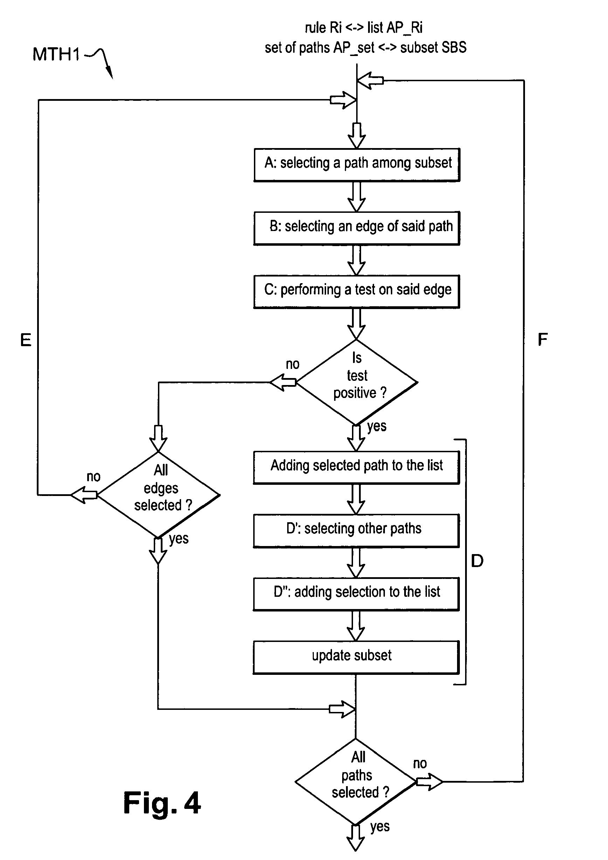

Steps of said method MTH1 are schematically illustrated in figure 4. The method MTH1 is carried out for a given filtering device rule Rᵢ, said rule Rᵢ being associated with a list AP_Rᵢ which is empty at the beginning of the method. As for the first embodiment, the method MTH1 uses a predetermined set of paths AP_set comprising attack paths.

Said method MTH1 comprises the following steps:
- Step A: Selecting an attack path APᵤ among a subset SBS of the set of paths AP_set. Said subset SBS comprises paths of the set of paths AP_set that are not contained into the list AP_Rᵢ. At the beginning of the method, the list AP_Rᵢ is empty, and then the subset SBS is the set of paths AP_set.
- Step B: Selecting an edge of said attack path APᵤ. At the beginning of the method, this edge is for example the first edge of the attack path APᵤ.
- Step C: Performing a test, said test being:
   ■ negative if the selected edge does not match the filtering rule Rᵢ
   ■ positive if the selected edge matches the filtering rule Rᵢ

A positive test means that the selected attack path APᵤ is relevant to the filtering rule Rᵢ.
- Step D: If the test is positive:
   o Adding the selected attack path APᵤ to the list AP_Rᵢ and updating the subset SBS of the set of paths AP_set, so that an attack path APᵤ can not been selected twice.
   o Substep D': Selecting attack paths APᵥ among the subset SBS that comprise the selected edge.
   o Substep D": Adding said selection of attack paths APᵥ to the list. Thus, the drawing up of the list AP_Rᵢ is accelerated because determining an attack path APᵤ as relevant to the filtering rule Rᵢ potentially permits to determine other relevant attack paths APᵥ containing the same edge, which enables to determine the relevance of said other attack paths APᵥ.
   o Updating the subset SBS of the set of paths AP_set to avoid reselecting the attack path APᵤ selected within step A, or an attack path APᵥ selected within substeps D' and D".
- Step E: If the test is negative, then reiterate steps A, B, C and D until all edges of the selected attack path APᵤ have been selected or until one test is positive. If tests are negative for all edges of the selected attack path APᵤ, then it means that said attack path APᵤ is not relevant to the filtering rule Rᵢ.
- Step F: Reiterating steps A, B, C, D and E until all attack paths of the subset SBS have been selected. At the ending of the method, the list AP_Rᵢ comprises all attack paths relevant to the filtering rule Rᵢ.

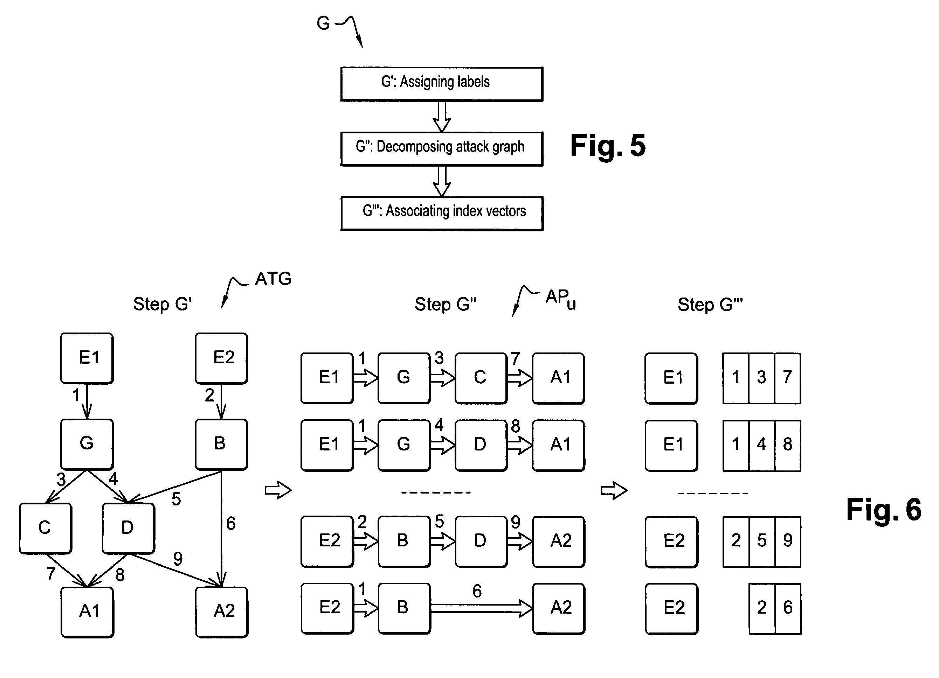

In a not limited embodiment, the carrying out of the substep D' is realized by means of labels and index vectors, as explained hereafter. In this not limited embodiment, the set of paths has been built from an attack graph. The way of generating said set of paths is schematically illustrated in figure 5 and comprises the following steps:
- Step G': Assigning a label to every edge depicted in the attack graph;
- Step G": Decomposing the attack graph into dissociated attack paths;
- Step G"': Associating an index vector to every dissociated attack path, said index vector comprising labels assigned to the edges of said potential attack path.

The previous example of attack graph depicted in figure 1 is used for illustrating, in reference to figure 6, said above-mentioned way of generating a set of paths from an attack graph. Indeed, figure 6 schematically illustrates steps G', G" and G"' applied to the attack graph ATG of figure 1. In step G', a label is assigned to each edge:
- label "1" is assigned to edge edg1
- label "2" is assigned to edge edg2
- etc.

In step G", the attack graph ATG is dissociated into six attack paths. Then, in step G"', an index vector is assigned to each attack path. For example, the index vector associated with the attack path (edg2; edg4; edg8) is (2; 4; 8) and the index vector associated with the attack path (edg1; edg5; edg8) is (1; 5; 8).

Then, the selecting of paths that comprise the selected edge, carried out in step D', is realized by identifying paths among the subset that comprise the selected edge, by comparing labels of their index vectors with the label of the selected edge. Still using the previous example, if the attack path (edg2; edg4; edg8) is added to the list because the test is positive for edge edg8, that is to say that the edge edg8 matches the filtering rule, then the attack path (edg1; edg5; edg8) is added to the list because it comprises the edge edg8. This is deduced by comparing the label of edge edg8, that is to say "8", with the labels of the index vector of path (edg1; edg5; edg8), that is to say (1; 5; 8).

An associated algorithm in native language is given hereafter:

```
 AP_Ri = null (this is the list storing attack paths relevant to the
 filtering device rule Ri, which is empty at the beginning of the
 method)
 For each attack path APu of the subset {
 For each edge j of the attack path APu {
  If test is positive, Then {
     Add the attack path APu to the list AP_Ri;
     Select paths of the subset that comprise the label of the
     selected edge in their index vector;
     Add said selection to the list;
     Update the subset;
     Break
  }
  }
  }
```

### Method for quoting the contribution of a filtering rule

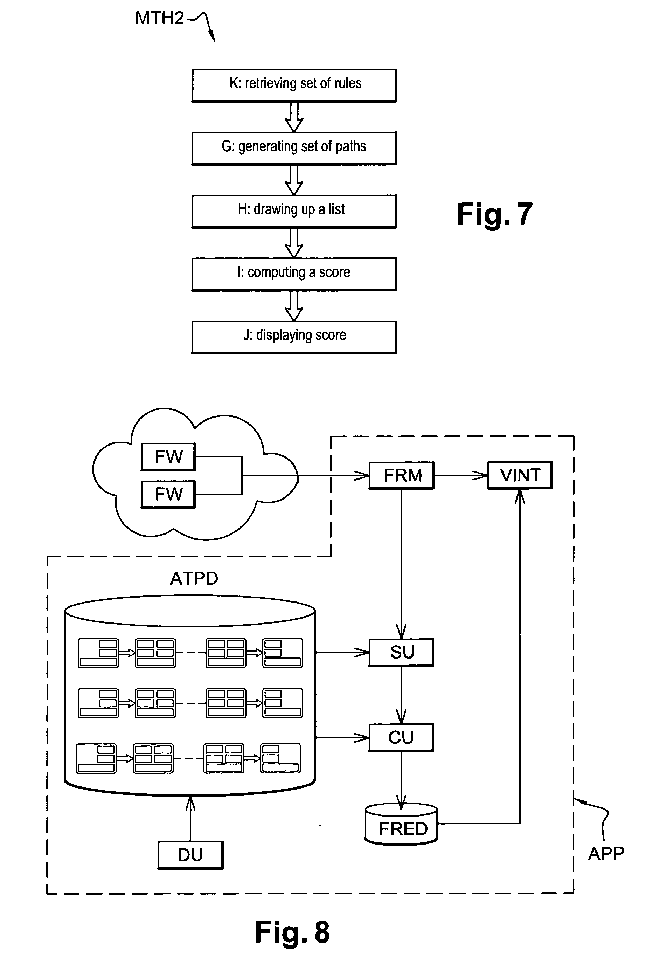

The invention also provides a method MTH2 for quoting the contribution to a network overall security state of a filtering rule, using the method MTH1 for drawing up a list of paths associated with said filtering rule. Said method MTH2 is schematically illustrated in figure 7, and comprises the following steps:
- Step K: Retrieving a set of rules defined for the filtering devices protecting the network. This set can be retrieved by using an online protocol that directly asks for enforced filtering rules to the filtering devices, using proper privileges/credentials. This set of rules can also being retrieved, on an offline basis, from a repository, that is to say a file or a database, which stores the filtering rules for the filtering devices. Then selecting a filtering rule among a set of rules defined for the filtering devices.
- Step G: Generating a set of paths comprising potential attack paths from entry points to critical assets. The set of paths is for example generated using one of the following existing modules/algorithms and is stored in a database:
   ■ Ingols et al.; Practical Attack Graph Generation for Network Defense (2006)
   ■ Zhang Lufeng, Tang Hong, Cui YiMing, Zhang JianBo; Network Security Evaluation through Attack Graph Generation (2009)
   ■ Steven Noel, Sushil Jajodia. Measuring Security Risk of Networks Using Attack Graphs (2010)
   ■ Kanoun et al. : Generating Attack Graphs for ICT systems, Demonstration at BELL LABS OPEN DAYS 2012, Villarceaux (2012)
- Step H: Drawing up a list of paths associated with said filtering rule, using the method for drawing up a list of paths. The generated set of paths is used within step A.
- Step I: Computing a score associated with said filtering rule by means of said list of paths. Said computing is based on indicators associated with the attack paths of the list of paths. Indeed, each attack path of the set of paths is associated with an indicator representing, with a total order relation, the contribution of said attack path to the global risk level of the critical asset targeted by said attack path. The indicator can be assessed a priori by an administrator of the network, basing on the criticality of the information and the nature of the exploited vulnerabilities. For example, the score is computed by adding, with a simple sum or a weighted sum, the indicators of the attack paths of the list of paths. This score can be stored in a database.
- Step J: Displaying said score on a Graphical User Interface (GUI), in order for an administrator to take some decisions or realize protection actions. This step is optional.

### Apparatus

The invention also provides an apparatus APP for carrying out the methods MTH1, MTH2 previously described. Such an apparatus APP is schematically illustrated in figure 8. Said apparatus APP comprises:
- A filtering device rule manager FRM for carrying out step K, that is to say retrieving a set of rules defined for the filtering devices FW. This filtering device rule manager FRM is adapted for accessing a repository storing the filtering rules defined for the filtering devices FW, and/or communicating with the filtering devices FW so as to retrieve the set of rules by a secure protocol.
- In a not limited embodiment, a dissociating unit DU for carrying out steps G', G" and G"'. The dissociation unit DU takes as input an attack graph. First, the dissociation unit DU assigns a unique label to every edge in the attack graph. Second, the attack graph is decomposed into separate attack graphs. Then, every attack path is associated with an index vector that contains the list of its edges labels. Finally, all the attack paths as well as their respective index vectors are stored in an attack path database ATPD. To sum up, the dissociation unit DU is adapted for, from an attack graph associated with the network:
   ■ Assigning a label to every edge depicted in the attack graph
   ■ Decomposing the attack graph into a set of paths comprising potential attack paths
   ■ Associating an index vector to every dissociated potential attack path, said index vector comprising labels assigned to the edges of said potential attack path
   ■ Storing said set of path in the attack path database ATPD.
   It should be noted that said dissociation unit DU is used in case of carrying out of the second embodiment of the method for drawing up a list associated with the filtering rule. In case of carrying out of the first embodiment of the method for drawing up a list associated with the filtering rule, then the dissociation unit DU is not necessary.
- An attack path database ATPD, which is a memory for storing a set of paths comprising potential attack paths. In this database ATPD are stored all the attack paths to reach the pre-identified critical assets of the network from a set of specified possible entry points for attackers. Moreover, the attack path database ATPD stores the indicators associated to the attack paths, as explained previously. In case of a dissociation unit DU, the index vectors are also stored in the attack path database ATPD.
- A selection unit SU for drawing up list of paths associated to said filtering rule, said list of paths comprising paths that are relevant to the filtering rule. Said selection unit is adapted for carrying out the method for drawing up a list associated with the filtering rule, according to the first or the second embodiment described.
- A calculation unit CU for carrying out step I, that is to say for computing a score associated with said filtering rule by means of said list of paths. For a filtering device rule, the calculation unit CU computes a score, for example a ranking, by aggregating (for example with a simple sum or a weighted sum) the indicators of all attack paths of the list associated with the filtering rule. Then, this score is stored in a filtering device rule efficiency database FRED.
- A filtering device rule efficiency database FRED for storing the computed scores associated with the filtering rules of the filtering devices FW.
- A user interface UINT for carrying out step J, that is to say displaying said scores to an administrator.

This invention enables to rationally quantify the real effect and contribution of a filtering device rule to the overall security state of a network protected by a filtering policy. The invention allows a security officer to understand, for each rule of the filtering policy, the importance (for a "deny" rule) or severity (for an "allow" rule) on the overall security of the network under their responsibility.

The invention also allows assessing the impact of a new rule or any modification of a filtering device rule with respect to the overall security. Hence, a security officer may for example reject the opening of a traffic, for example by inserting or modifying the action of a rule from "deny" to "accept", if the invention indicated that the calculated score is too high, and induces a risk on the protected network (for example on the critical assets) that can not be accepted.

## Claims

1. Method (MTH1) for drawing up a list of paths (AP_Rᵢ) associated with a filtering rule (Rᵢ) of a filtering device (FW) protecting a network, said network being represented by a plurality of nodes, a path comprising a sequence of consecutive edges, an edge being a connection from a node to another node, said method (MTH1) comprising the following steps:
- Step A: Selecting a path (APᵤ) among a subset (SBS) of a set of paths (AP_set),
- Step B: Selecting an edge of said selected path (APᵤ),
- Step C: Performing a test, said test being:
■ negative if the selected edge does not match the filtering rule (Rᵢ)
■ positive if the selected edge matches the filtering rule (Rᵢ)
- Step D: In the case of positive test, adding the selected path (APᵤ) to a list (AP_Rᵢ) associated with the filtering rule (Rᵢ),
- Step E: Reiterating steps B, C, D until one test is positive or all edges of the selected path (APᵤ) have been selected,
- Step F: Reiterating steps A, B, C, D, E until all paths (APᵤ) of the subset (SBS) have been selected.

2. Method (MTH1) according to claim 1, wherein the subset (SBS) comprises paths (APᵤ) of the set of paths (AP_set) that are not contained into the list (AP_Rᵢ).

3. Method (MTH1) according to any of the previous claims, wherein step D comprises additional steps of: in the case of positive test:
- Step D': Selecting paths (APᵤ) among the subset (SBS) that comprise the selected edge,
- Step D": Adding said selection to the list (AP_Rᵢ).

4. Method (MTH2) for quoting the contribution to a network overall security state of a filtering rule (Rᵢ) of a filtering device (FW) protecting said network, said network being represented by a plurality of nodes, said nodes comprising entry points for attacks and critical assets to secure, said method (MTH2) comprising the following steps:
- Step G: Generating a set of paths (AP_set), a path comprising a sequence of consecutive edges, an edge being a connection from a node to another node, said set of paths (AP_set) comprising potential attack paths (APᵤ) from entry points to critical assets,
- Step H: Drawing up a list of paths (AP_Rᵢ) associated with said filtering rule (Rᵢ), according to the method (MTH1) of claims 1 to 3, using said set of paths (AP_set) within step A,
- Step I: Computing a score associated with said filtering rule (Rᵢ) by means of said list of paths (AP_Rᵢ).

5. Method (MTH2) according to claim 4, wherein step G comprises an initial step of:
- Step G": Decomposing an attack graph into dissociated potential attack paths, said attack graph depicting various attack paths to reach critical assets from entry points through edges.

6. A method (MTH2) according to claim 5, wherein step G" comprises:
- Step G': Assigning a label to every edge depicted in the attack graph,
- Step G"': Associating an index vector to every dissociated potential attack path, said index vector comprising labels assigned to the edges of said potential attack path.

7. A method (MTH2) according to claims 3 and 6, wherein step D' comprises an initial step of:
- Step D"': Identifying paths among the subset that comprise the selected edge by comparing labels of their index vectors with the label of the selected edge.

8. A method (MTH2) according to any of claims 4 to 7, wherein each potential attack path (APᵤ) of the set of paths (AP_set) is associated with an indicator representing the contribution of said attack path to the global risk level of the critical asset targeted by said attack path, and the score of step I is computed by means of the indicators of attack paths of the list of paths (AP_Rᵢ).

9. A method (MTH2) according to claim 8, wherein the score of step I is computed by a weighted sum of said indicators.

10. A method (MTH2) according to any of claims 4 to 9, comprising an initial step K of: Selecting a filtering rule (Rᵢ) among a set of rules of at least a filtering device protecting the network.

11. A method (MTH2) according to claim 10, wherein step K comprises an initial step of: Retrieving said set of rules from a repository or from at least a filtering device (FW) by using a secure protocol.

12. An apparatus (APP) for quoting the contribution to a network overall security state of a filtering rule (Rᵢ) of a filtering device (FW) protecting said network, comprising:
- A memory (ATPD) for storing a set of paths (AP_set),
- A selection unit (SU) for drawing up list of paths (AP_Rᵢ) associated to said filtering rule (Rᵢ), said list of paths (AP_Rᵢ) comprising paths (APᵤ) relevant to the filtering rule (Rᵢ),
- A calculation unit (CU) for computing a score associated with said filtering rule (Rᵢ) by means of said list of paths (AP_Rᵢ),
- A user interface (UINT) for displaying said score.

13. An apparatus (APP) according to claim 12, comprising a filtering device rule manager (FRM) for retrieving a set of rules of at least a filtering device (FW).

14. An apparatus (APP) according to claim 12 or 13, comprising a dissociation unit (DU) for, from an attack graph (ATG) associated with the network:
- Assigning a label to every edge depicted in the attack graph (ATG);
- Decomposing the attack graph (ATG) into a set of paths (AP_set) comprising potential attack paths (APᵤ);
- Associating an index vector to every dissociated potential attack path (APᵤ), said index vector comprising labels assigned to the edges of said potential attack path (APᵤ);
- Storing said set of path (AP_set) in the memory (ATPD).

15. A computer program product for a computer, comprising a set of instructions, which when loaded into said computer, causes the computer to carry out a method (METH1, METH2) according to any one of the previous claims 1 to 11.
